# EUROPEAN PATENT SPECIFICATION

(11) **EP 3 828 450 B1**
(45) Date of publication and mention of the grant of the patent: **29.05.2024**
(21) Application number: 19841217.3
(22) Date of filing: 19.07.2019
(51) Int. Cl.: F16K 27/00, F16K 31/04, F16K 47/02, F16K 27/02, F16K 47/08, F25B 41/31

(54) **ELECTRIC VALVE**
ELEKTRISCHES VENTIL
ÉLECTROVANNE

(30) Priority: 25.07.2018 JP 2018139805
(43) Date of publication of application: 02.06.2021
(73) Proprietor: Fujikoki Corporation, Tokyo 158-0082 (JP)
(72) Inventor: HISHIYA, Kohei, Tokyo 158-0082 (JP)
(74) Representative: Ter Meer Steinmeister & Partner
(86) International application number: PCT/JP2019/028457
(87) International publication number: WO 2020/022214

(56) References cited:
- JP-A- H1 019 420
- JP-A- H1 019 420
- JP-A- H1 123 104
- JP-A- 2007 162 851
- JP-A- 2007 225 210
- JP-A- 2008 170 055
- JP-A- 2008 170 055
- JP-A- 2019 143 726

## Description

### TECHNICAL FIELD

The present invention relates to a motor valve used in a refrigeration cycle of an air conditioner, a refrigerator, or the like.

### BACKGROUND ART

In the air conditioner, the refrigerator, etc., the motor valves are used to change a direction and a flow rate of a refrigerant flowing inside according to the desired function. In this motor valve, the refrigerant flows into the valve body in a gas-liquid two-phase state, and sudden pressure fluctuations occur when air bubbles contained in the refrigerant, especially large-diameter air bubbles, pass through an orifice, and its accompanying pressure wave propagates to pipes, causing abnormal noise. In particular, recently, in order to reduce an environmental impact of the refrigerant, there is a tendency to use a refrigerant having a reduced warming potential compared to the conventional refrigerant, however this refrigerant tends to be the two-phase flow inside the pipe, and the abnormal noise is likely to occur.

In order to prevent such abnormal noise from being generated, as shown in Patent Documents 1 and 2, a technique has been proposed in which bubbles in the two-phase flow are fined to prevent the generation of the pressure waves due to the bursting of the bubbles when passing through the orifice, by arranging a rectifying member such as a porous plate at the port of the motor valve and the pipe connection portion, and the refrigerant being passed through the small hole thereof.

### CITATION LIST

### PATENT LITERATURE

Patent Document 1: JP2007-16958A
Patent Document 2: JP2007-107623A
JP H10 19420 A discloses an air conditioner having an outdoor unit, and a plurality of indoor units each having an indoor heat exchanger and an indoor motor-driven expansion valve sequentially connected via a refrigerant tube, a channel resistor provided at the tube for connecting the exchanger and the valve, and a straightening member for substantially uniformly regulating sizes of bubbles generated in the refrigerant flowing through the tube is provided at a downstream of the resistor at the time of a heating operation.
JP 2007 225210 A discloses a bi-directional constant pressure expansion valve, wherein opposed members are received inside of a copper pipe, and bulging lock portions formed by partially bulging the copper pipe inward, are locked with locking grooves formed on outer peripheral phases of the opposed members.
JP 2008 170055 A discloses a noise attenuating apparatus, to prevent generation of coolant passing noise caused by a flow of coolant in a gap between an inner circumference phase of a connection piping part, and an outer circumference phase of a coolant passing member.
JP 2007 162851 A discloses a motor-operated valve capable of effectively preventing flowing noise from selecting distribution of holes to be formed on its straightening vane for subdividing bubbles.

### SUMMARY OF INVENTION

### TECHNICAL PROBLEM

However, in the conventional technologies as described above, since the rectifying member is interposed and fixed between an outer wall of a valve body and an end of the pipe, a distance between the rectifying member and a valve chamber is short, and the effect of eliminating the air bubbles was not sufficient. That is, shape and dimensions of the air bubbles fined by the small holes of a rectifying plate are stabilized after a certain period of time in the refrigerant. According to the applicant's experiment, it is desirable that the dimensions of the inner diameter of the pipe are set so as to flow in the pipe even after passing through the rectifying plate in order to prevent the growth of the air bubbles. However, in the conventional technologies described above, since the rectifying plate is arranged between the end of the pipe and the outer wall of the valve body, the refrigerant that has passed through the rectifying plate immediately flows into the valve chamber from the inside of the pipe, and the air bubbles tend to grow in the valve chamber due to changes in pressure and flow direction at that time.

Further, by using a cone-shaped or an arc-shaped (hereinafter, including claims, collectively referred to as the cone-shaped) rectifying member as a configuration for effectively fining the air bubbles in the refrigerant, it is also considered to increase the number of small holes through which the refrigerant passes even if the pipes have the same inner diameter. However, when the cone-shaped rectifying member is used in the conventional technologies, there arises a problem that a tip of the cone protruding toward the valve body interferes with the valve body or a sufficient distance between the rectifying member and the valve body cannot be secured.

In order to solve such a problem, it is necessary to arrange the rectifying member at a position away from a joint portion between the valve body and the pipe. However, arranging the rectifying member in the middle of the pipe requires a great deal of time and effort to secure the positioning accuracy and the fixing strength.

The present invention has been proposed to solve the problems of the conventional technologies described above, and an objective is to provide the motor valve which can easily and surely fix the rectifying member in the middle of the pipe and has excellent quietness.

### SOLUTION TO THE PROBLEMS

In order to achieve the objective, a motor valve according to the present invention includes the following structures.
(1) a plurality of ports provided in a valve chamber of the motor valve.
(2) a plurality of pipes fixed respectively to the plurality of ports and connecting the motor valve and an external device.
(3) a rectifying member inserted into at least one of the plurality of pipes.
(4) at least one of the plurality of pipes includes a large diameter portion, a small diameter portion formed on the valve chamber side of the large diameter portion, and a step portion provided at a boundary portion between the large diameter portion and the small diameter portion.
(5) the rectifying member is fixed to the large diameter portion of the pipe by a positioning means in a state where an axial movement of the pipe is restricted by the step portion.
(6) the positioning means is a swaging portion that deforms a wall portion of the pipe facing the rectifying member in the inner diameter direction of the pipe and fixes the rectifying member to the wall portion of the pipe.
(7) a contact surface coming into contact with the step portion is provided on an end surface of the rectifying member facing the small diameter portion.

The following structure may be applied to the present invention.
(1) the rectifying member includes an elastic member biased in an outer peripheral direction of the pipe, and
   the positioning means is an engaging portion provided on the elastic member and an engaged portion formed on an inner surface of the pipe, and the engaging portion provided on the elastic member is engaged with the engaged portion provided on the pipe.
(2) the rectifying member is a disk-shaped or columnar-shaped member coaxial with the pipe and closes the pipe, and the rectifying member is provided with one or a plurality of openings communicating in the axial direction of the pipe.
(3) the rectifying member includes a frame portion along an inner circumference of the pipe and a net stretched over the frame portion.
(4) at least a portion of the net protrudes in a cone shape into the small diameter portion of the pipe.
(5) the step portion is provided at the large diameter portion side by the inner diameter dimension or more of the small diameter portion from an end portion of the small diameter portion on the valve body side.

### ADVANTAGEOUS EFFECTSS OF INVENTION

According to the present invention, the rectifying member can be fixed reliably at a position away from the valve body with good positioning accuracy by a simple structure.

### BRIEF DESCRIPTION OF DRAWINGS

FIG. 1 is a cross-sectional view illustrating a configuration of the motor valve according to a first embodiment.
FIG. 2 is a cross-sectional view illustrating a configuration of the motor valve according to the first embodiment.

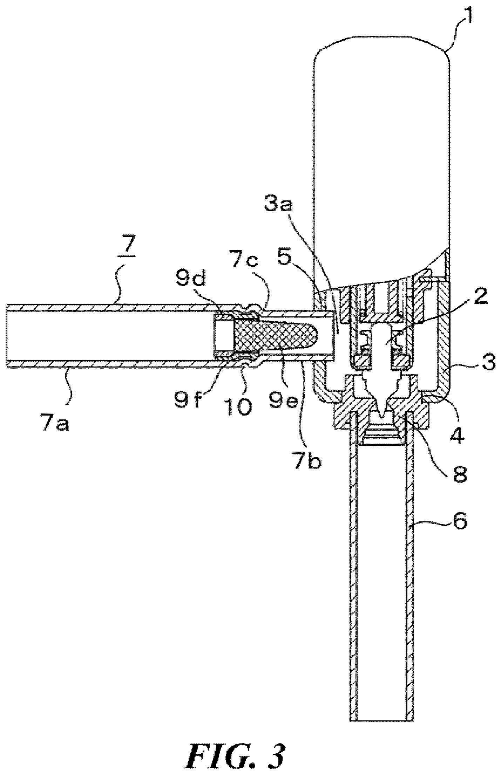

FIG. 3 is a cross-sectional view illustrating a configuration of the motor valve according to the first embodiment.
FIG. 4A to 4F are a front view illustrating an example of the rectifying member in the present invention.

### DESCRIPTION OF EMBODIMENTS

### [1. The first embodiment]

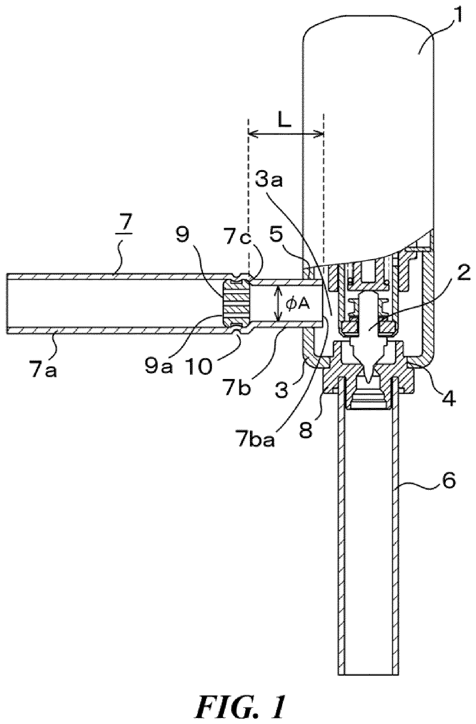

Hereinafter, embodiments of the motor valve according to the present invention will be described with reference to the drawings. FIG. 1 is a cross-sectional view illustrating a configuration of the motor valve. This motor valve is arranged in various directions in actual use, however in the present description, a positional relationship of each member will be described according to the direction shown in FIG. 1.

The motor valve adjusts an opening degree of an orifice 8 provided in a valve body 3 by moving a rod-shaped valve shaft 2 up and down inside a space defined by a cup-shaped cylindrical member 1 called a can and the valve body 3 and controls a flow rate of the passing fluid. A rotor of a stepping motor that drives the valve shaft 2 is provided inside the cylindrical member 1, and a coil of the stepping motor is arranged outside the cylindrical member 1. The motor valve rotates the rotor by energizing the coil and reciprocates the valve shaft 2 coupled to the rotor in the axial direction to open and close the valve. However, in FIG. 1, the stator, coil, and the like provided outside the cylindrical member 1 are omitted.

The valve body 3 having a valve chamber 3a inside is provided below the cylindrical member 1. A first port 4 and a second port 5, which are paths for a fluid such as a refrigerant, are connected to the valve chamber 3a, respectively, and the first port 4 and the second port 5 are communicated with each other via the valve chamber 3a. A first pipe 6 and a second pipe 7 that connect the motor valve and external devices are fixed to the first port 4 and the second port 5, respectively. In the present embodiment, the refrigerant flows from the second pipe 7 arranged in the lateral direction toward the first pipe 6 extending downward.

A cylindrical-shaped orifice 8 is fitted into the first port 4 and fixed by means such as welding. A valve seat is formed around a central opening of the orifice 8, and the flow rate is controlled by the width of the gap between the valve seat portion and a tip of the valve shaft 2. An end of the first pipe 6 is fitted into the outside of the orifice 8 and fixed by means such as welding.

The second pipe 7 has a large diameter portion 7a on an external supply side and a small diameter portion 7b on a motor valve side, and a step portion 7c provided at a boundary portion between the large diameter portion 7a and the small diameter portion 7b. The second pipe 7 is fixed to the valve body 3 with an end of the small diameter portion 7b inserted into the second port 5. A position of the step portion 7c is provided at a position separated by an inner diameter dimension (ϕA) or more of the small diameter portion 7b from an end portion 7ba on the small diameter portion 7b side of the second pipe 7. A rectifying member 9 is fixed to a boundary portion of the large diameter portion 7a with the step portion 7c. The rectifying member 9 is inserted into the large diameter portion 7a in a state where the axial movement of the second pipe 7 is restricted by the step portion 7c. That is, according to the configuration of the present embodiment, the distance L from the end portion 7ba on the small diameter portion 7b side of the second pipe 7 to the rectifying member 9 positioned on the step portion 7c may be arbitrarily set. Then, by setting the distance L to ϕA or more, a regrowth of the air bubbles in the refrigerant subdivided by the rectifying member 9 can be suppressed. On the other hand, when the distance L is too long, since the fine bubbles grow up towards the valve chamber 3a, t is desirable that the distance L is 10 times or less of ϕA.

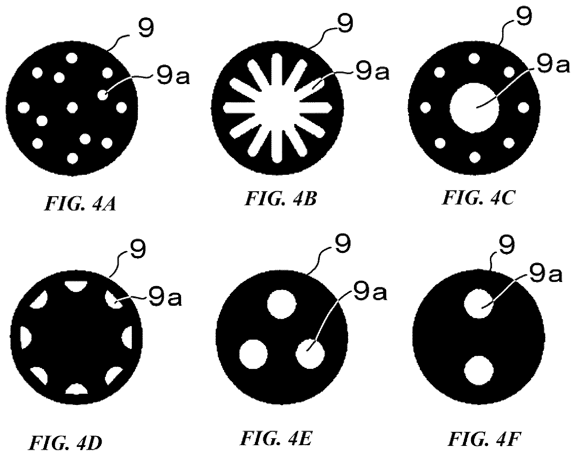

The rectifying member 9 is a columnar-shaped member that is coaxial with the second pipe 7 and closes the second pipe 7. The rectifying member 9 is provided with one or a plurality of openings 9a communicating in the axial direction of the second pipe 7. A shape of the opening 9a is a slit shape or a small hole shape for fining the air bubbles in the refrigerant, and for example, those shown in FIGS. 4A to 4F can be adopted. An optimum shape of the opening 9a is selected according to the property of easily generating the two-phase flow of the refrigerant, the flow velocity, the viscosity, the diameter of the pipe, and the like. Further, a length of the columnar-shaped rectifying member 9 or a wall thickness of a disk when the rectifying member 9 is formed into the disk shape is appropriately selected depending on the nature of the refrigerant and the diameter of the pipe. Such a rectifying member 9 is formed by a cutting processing or a pressing processing.

The second pipe 7 and the rectifying member 9 are provided with positioning means for fixing the two. In the present embodiment, the positioning means is a swaging portion 10 that deforms the wall portion of the second pipe 7 facing the rectifying member 9 in the inner diameter direction of the second pipe 7 and tightens the rectifying member 9 from surroundings and fix it to the wall portion of the second pipe 7.

### [1-2. Manufacturing method]

In order to fix the rectifying member 9 in the second pipe 7 in the present embodiment, first, with the rectifying member 9 held at a tip of the elongated rod-shaped jig of the second pipe 7, the rectifying member 9 is inserted from an end opening of the large diameter portion 7a to a position where it abuts on the step portion 7c, and the rectifying member 9 is positioned. Next, by pressing and deforming a wall surface of the second pipe 7 from an outer circumference of the large diameter portion 7a, the rectifying member 9 is interposed between the inner wall surface of the second pipe 7 and the step portion 7c by the swaging portion 10. After that, by pulling out the jig from the second pipe 7, the fixing of the rectifying member 9 to the second pipe 7 is completed. After that, the second pipe 7 is fixed to the second port 5 of the valve body 3 by means such as welding.

### [1-3. Effect]

The motor valve of the present embodiment has the following effects.
(1) The position where the step portion 7c is provided can be arbitrarily set by widening one end side of one second pipe 7 to create the large diameter portion 7a. Therefore, it is possible to easily manufacture a long or short dimension from the end on the small diameter portion 7b side to the rectifying member 9. Therefore, in the present embodiment, the distance from the valve body 3 to the rectifying member 9 can be freely set. As a result, the rectifying member 9 can be arranged at a position most suitable for fining the air bubbles in the refrigerant.
(2) Since the rectifying member 9 is provided in the middle of one seamless second pipe 7, compared with the structure in which the rectifying member 9 is interposed between the cut pipes, the number of parts is smaller, the sealing performance is excellent, and there is no risk of the refrigerant leakage.
(3) The rectifying member 9 can be fixed only by deforming the second pipe 7 such as the step portion 7c and the swaging portion 10, compared with the fixing means such as bolt tightening or welding, the rectifying member 9 can be fixed by a simple means.
(4) When the rectifying member 9 is inserted halfway through the second pipe 7 using the elongated jig, the rectifying member 9 at the tip of the jig is accurately restricted by the step portion 7c, so that the positioning accuracy of the rectifying member 9 is high.

### [2. The second embodiment]

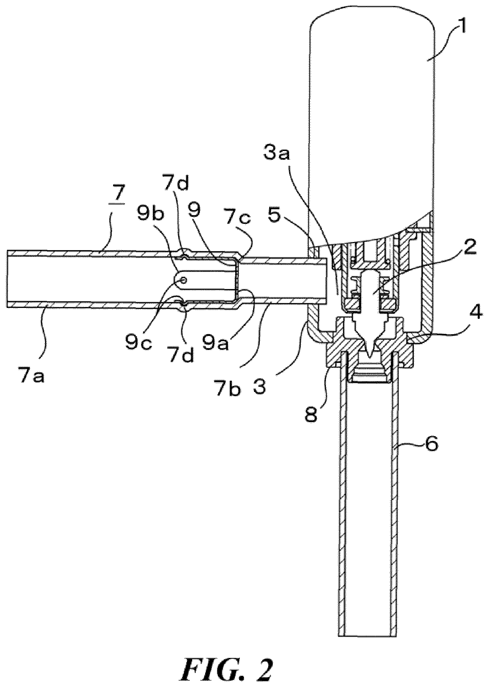

A second embodiment will be described with reference to FIG.2. The positioning means of the rectifying member 9 is different between the second embodiment and the first embodiment. That is, the rectifying member 9 of the second embodiment is composed of a disk-shaped metal plate such as stainless steel, and four elastic members 9b extending along the axial direction of the second pipe 7 toward the large diameter portion 7a are provided around the rectifying member. The elastic member 9b is biased in the outer peripheral direction of the second pipe 7. An engaging portion 9c protruding in the outer peripheral direction of the second pipe 7 is provided at a tip portion of the elastic member 9b. On an inner surface of the second pipe 7, a concave-shaped engaged portion 7d into which the engaging portion 9c is fitted is provided in a ring shape over the entire inner circumference of the second pipe 7.

Also in the second embodiment having such configuration, the rectifying member 9 is inserted into the second pipe 7 from the large diameter portion 7a side by using the jig, and the rectifying member 9 and the step portion 7c are brought into contact with each other to perform the positioning. At this time, the elastic member 9b tries to spread outward due to its elasticity, however is suppressed by the inner wall surface of the second pipe 7 and slides on the inner surface of the second pipe 7 in a state of being contracted inward. When the rectifying member 9 and the step portion 7c come into contact with each other, a tip of the engaging portion 9c enters the engaged portion 7d due to the elasticity of the elastic member 9b, and the rectifying member 9 is fixed to the second pipe 7.

Also in the second embodiment, since the rectifying member 9 can be fixed at a position in the middle of the second pipe 7, the same effect as that of the first embodiment is exhibited. Moreover, since the subsequent swaging work is not required just by inserting the rectifying member 9, the assembly work becomes simpler.

### [3. The third embodiment]

A second embodiment will be described with reference to FIG.2. The configuration of the rectifying member 9 is different between the third embodiment and each embodiment described above. In the third embodiment, the rectifying member 9 includes a frame portion 9d along the inner circumference of the second pipe 7 and a net 9e stretched over the frame portion 9d. In the present embodiment, the frame portion 9d includes an inner frame that fixes the edge of the net 9e so as not to fray, and a tubular outer frame that is fitted and fixed to the outer circumference thereof. A ring-shaped recess 9f is provided on the outer circumference of the tubular outer frame. The portion of the recess 9f on the net 9e side, that is, the portion on the small diameter portion 7b side has a tapered surface in which the small diameter portion 7b side is narrowed.

The outer circumference of the net 9e is smaller than the small diameter portion 7b, and the net projects in a cone shape in the downstream direction of the refrigerant flowing in the second pipe 7 with respect to the frame portion 9d, that is, inside the small diameter portion 7b. However, the tip of the cone does not protrude from an end of the second pipe 7 on the small diameter portion 7b side, and does not protrude from the outer wall surface of the valve body 3. The net 9e may be a metal product such as a wire mesh or a punching metal, or a plastic product integrally molded with the frame portion 9d.

A swaging portion 10 protruding toward the inner diameter side is provided in a ring shape on a portion of the second pipe 7 facing the rectifying member 9, and the protruding portion of the swaging portion 10 engages with the recess 9f of the frame portion 9d.

Also in the third embodiment, similarly to the first embodiment, the rectifying member 9 is inserted from the large diameter portion 7a side using the jig until it comes into contact with the step portion 7c. Then, the small diameter portion 7b side of the rectifying member 9 is positioned by the step portion 7c, and the protruding portion of the swaging portion 10 engages with the recess 9f of the frame portion 9d, so that the rectifying member 9 and the second pipe 7 are fixed. In this case, since the small diameter portion 7b side of the recess 9f has a tapered surface, the convex portion of the swaging portion 10 fits smoothly into the recess 9f, however once fitted, the rectifying member 9 does not move to the large diameter portion 7a side.

In the third embodiment, the frame portion 9d may be provided with the same elastic member 9b and engaging portion 9c as in the second embodiment, and be engaged with the engaged portion 7d provided on the inner wall surface of the second pipe 7, thus, the second pipe 7 and the rectifying member 9 may be fixed. In the third embodiment, as in the first embodiment, after the rectifying member 9 is inserted, the second pipe 7 may be deformed from the outer circumference and the frame portion 9d may be fixed by the swaging portion 10.

In the third embodiment having such configuration, in addition to exhibiting the same effects as those of the above-described embodiments, it becomes possible to use a cone-shaped rectifying member 9 having a large surface area and a large number of openings 9a. Therefore, in the third embodiment, a contact area between the rectifying member 9 and the refrigerant can be made large, and the air bubbles in the refrigerant can be effectively fined. Further, in the third embodiment, even if the cone of the rectifying member 9 protrudes greatly to the valve body 3 side, the position of the step portion 7c for fixing the rectifying member 9 may be provided at a position away from the wall surface of the valve body 3.

### [4. The fourth embodiment]

Although the embodiments of the present invention have been described above, various omissions, replacements, and changes can be made without departing from the scope of the invention as defined by the appended claims.

For example, not only the second pipe 7, but also the first pipe 6 or both pipes may be provided with the rectifying member 9. Further, when fixing the pipe to the valve body 3, the large diameter portion 7a side may be fixed to the valve body 3. The upstream side of the refrigerant does not necessarily have to be the large diameter portion 7a, and when the fixing strength of the swaging portion 10 and the engagement strength between the engaging portion 9c and the engaged portion 7d are sufficient, refrigerant can also be flowed from the small diameter portion 7b side.

### DESCRIPTION OF REFERENCE CHARACTERS

- 1: Cylindrical member
- 2: Valve shaft
- 3: Valve body
- 3a: Valve chamber
- 4: First port
- 5: Second port
- 6: First pipe
- 7: Second pipe
- 7a: Large diameter portion
- 7b: Small diameter portion
- 7ba: End portion
- 7c: Step portion
- 7d: Engaged portion
- 8: Orifice
- 9: Rectifying member
- 9a: Opening
- 9b: elastic member
- 9c: Engaging portion
- 9d: Frame portion
- 9e: Mesh
- 10: Swaging portion

## Claims

1. A motor valve comprising:
a plurality of ports connected to a valve chamber (3a) of the motor valve, the plurality of ports comprising a first port (4) and a second port (5) communicated with each other via the valve chamber (3a); a plurality of pipes fixed respectively to the plurality of ports and connecting the motor valve and an external device, the plurality of pipes comprising a first pipe (6) fixed to the first port (4) and a second pipe (7) fixed to the second port (5), wherein refrigerant flows from the second pipe (7) arranged in the lateral direction toward the first pipe (6) extending downward,
a cylindrical-shaped orifice (8) fitted into the first port (4), wherein a valve seat is formed around a central opening of the orifice (8),
a rod-shaped valve shaft (2) movable up and down inside a space within the valve chamber (3a) for controlling the flow rate of the refrigerant passing through the valve seat by controlling the width of a gap between the valve seat portion and a tip of the valve shaft (2); and
a rectifying member (9) inserted into the second pipe (7),
wherein the second pipe (7) includes a large diameter portion (7a), a small diameter portion (7b) formed on the valve chamber side of the large diameter portion (7a), and a step portion (7c) provided at a boundary portion between the large diameter portion (7a) and the small diameter portion (7b);
the rectifying member (9) is fixed to the large diameter portion (7a) of the second pipe (7) by a positioning means in a state where the rectifying member (9) and the step portion (7c) are brought into contact with each other and an axial movement of the second pipe (7) is restricted by the step portion (7c);
**characterized in that** the positioning means is a swaging portion (10) that deforms a wall portion of the second pipe (7) facing the rectifying member (9) in the inner diameter direction of the second pipe (7) and fixes the rectifying member (9) to the wall portion of the second pipe (7).

2. The motor valve according to claim 1, wherein
the rectifying member (9) includes an elastic member (9b) biased in an outer peripheral direction of the second pipe (7); and
the positioning means is an engaging portion (9c) provided on the elastic member (9b) and an engaged portion (7d) formed on an inner surface of the second pipe (7), and the engaging portion (9c) provided on the elastic member (9b) is engaged with the engaged portion (7d) provided on the second pipe (7).

3. The motor valve according to claim 1 or 2, wherein the rectifying member (9) is a disk-shaped or columnar-shaped member coaxial with the second pipe (7) and closes the second pipe (7), and the rectifying member (9) is provided with one or a plurality of openings communicating in the axial direction of the second pipe (7).

4. The motor valve according to claim 1 or 2, the rectifying member (9) includes a frame portion (9d) along an inner circumference of the second pipe (7) and a net (9e) stretched over the frame portion (9d).

5. The motor valve according to claim 4, wherein at least a portion of the net (9e) protrudes in a cone shape into the small diameter portion (7b) of the second pipe (7).

6. The motor valve according to any one of claims 1 to 5, the step portion (7c) is provided at the large diameter portion side by the inner diameter dimension or more of the small diameter portion (7b) from an end portion of the small diameter portion (7b) on the valve body side.

## Patentansprüche

1. Motorventil, umfassend
eine Mehrzahl von Anschlüssen, die mit einer Ventilkammer (3a) des Motorventils verbunden sind, welche Mehrzahl von Anschlüssen einen ersten Anschluss (4) und einen zweiten Anschluss (5) umfasst, die miteinander über die Ventilkammer (3a) kommunizieren; eine Mehrzahl von Leitungen, die jeweils an der Anzahl von Anschlüssen befestigt sind und welche das Motorventil und eine externe Vorrichtung verbinden, wobei die Mehrzahl von Leitungen eine erste Leitung (6) umfasst, die an dem ersten Anschluss (4) befestigt ist, und eine zweite Leitung (7), die an dem zweiten Anschluss (5) befestigt ist, wobei ein Kältemittel an der zweiten Leitung (7), die in seitlicher Richtung angeordnet ist, in Richtung der ersten Leitung (6) strömt, die sich nach unten streckt,
eine zylinderförmige Öffnung (8), die in den ersten Anschluss (4) eingepasst ist, wobei ein Ventilsitz um eine zentrale Öffnung der Öffnung (8) gebildet ist,
ein stabförmiger Ventilstößel (2), der in einem Raum innerhalb der Ventilkammer (3a) zur Steuerung des Strömungsdurchsatzes des Kältemittels, welches den Ventilsitz passiert, aufwärts und abwärts beweglich ist, indem die Breite des Zwischenraums zwischen Ventilsitzbereich und einer Spitze des Ventilstößels (2) gesteuert wird; und
ein Gleichrichtungselement (9), das in die zweite Leitung (7) eingesetzt ist,
eine zweite Leitung (7) einen Bereich (7a) großen Durchmessers, einen Bereich (7b) kleinen Durchmessers, der bezüglich des Bereichs (7a) großen Durchmessers auf der Seite der Ventilkammer ausgebildet ist, und einen Stufenbereich (7c) umfasst, der an einem Übergangsbereich zwischen dem Bereich (7a) großen Durchmessers und dem Bereich (7b) kleinen Durchmessers vorgesehen ist;
wobei das Gleichrichtungselement (9) an dem Bereich (7a) großen Durchmessers der zweiten Leitung (7) durch ein Positionierungsmittel in einen Zustand befestigt ist, in welchem das Gleichrichtungselement (9) und der Stufenbereich (7c) in Berührung miteinander gebracht werden und eine axiale Bewegung der zweiten Leitung (7) durch den Stufenbereich (7c) begrenzt wird;
**dadurch gekennzeichnet, dass** das Positionierungsmittel ein Verpressungsbereich (10) ist, der einen Wandbereich der zweiten Leitung (7) verformt, der dem Gleichrichtungselement (9) in der Innendurchmesserrichtung der zweiten Leitung (7) zugewandt ist, und welcher das Gleichrichtungselement (9) an dem Wandbereich der zweiten Leitung (7) befestigt.

2. Motorventil gemäß Anspruch 1,
bei welchem das Gleichrichtungselement (9) ein elastisches Element (9b) umfasst, welches in einer äußeren Umfangsrichtung der zweiten Leitung (7) vorgespannt ist; und
das Positionierungsmittel ein Eingriffsbereich (9c) ist, der auf dem elastischen Element (9b) ausgebildet ist, und ein Eingriffsbereich (7d), der auf einer inneren Oberfläche der zweiten Leitung (7) ausgebildet ist, wobei der Eingriffsbereich (9c), der auf dem elastischen Element (9b) vorgesehen ist, in den Eingriffsbereich (7d) auf der zweiten Leitung (7) eingreift.

3. Motorventil gemäß Anspruch 1 oder 2, bei welchem das Gleichrichtungselement (9) ein scheibenförmiges oder säulenförmiges Element ist, das koaxial zu der zweiten Leitung (7) steht und die zweite Leitung (7) abschließt, und das Gleichrichtungselement (9) mit einer oder mehreren Öffnungen versehen ist, die in axialer Richtung der zweiten Leitung (7) kommunizieren.

4. Motorventil gemäß Anspruch 2, bei welchem das Gleichrichtungselement (9) einen Rahmenbereich (9b) entlang eines inneren Umfangs der zweiten Leitung (7) umfasst, und ein Netz (9e), welches über den Rahmenbereich (9d) gespannt ist.

5. Motorventil gemäß Anspruch 4, bei welchem zumindest ein Teil des Netzes (9e) kegelförmig in den Bereich (7b) kleinen Durchmessers der zweiten Leitung (7) vorspringt.

6. Motorventil gemäß einem der Ansprüche 1 bis 5, bei welchem der Stufenbereich (7c) an der Seite des Bereichs großen Durchmessers in einen Abstand von dem Innendurchmesser des Bereichs (7b) kleinen Durchmessers oder mehr von einem Endbereich des Bereichs (7b) kleinen Durchmessers auf der Ventilkörperseite beabstandet vorgesehen ist.

## Revendications

1. Soupape motorisée comportant :
une pluralité de lumières reliées à une chambre de soupape (3a) de la soupape motorisée, la pluralité de lumières comportant une première lumière (4) et une seconde lumière (5) en communication l'une avec l'autre via la chambre soupape (3a) ; une pluralité de tuyaux respectivement fixés à la pluralité de lumières et reliant la soupape motorisée et un dispositif externe, la pluralité de tuyaux comportant un premier tuyau (6) fixé à la première lumière (4) et un second tuyau (7) fixé à la seconde lumière (5), dans laquelle du fluide frigorigène s'écoule à partir du second tuyau (7) agencé dans la direction latérale vers le premier tuyau (6) s'étendant vers le bas,
un orifice de forme cylindrique (8) adapté dans la première lumière (4), dans laquelle un siège de soupape est formé autour d'une ouverture centrale de l'orifice (8),
un axe de soupape en forme de tige (2) mobile vers le haut et vers le bas à l'intérieur d'un espace dans la chambre de soupape (3a) pour commander le débit du fluide frigorigène passant à travers le siège de soupape en commandant la largeur d'un interstice entre la partie de siège de soupape et un bout de l'axe de soupape (2) ; et
un élément de rectification (9) inséré dans le second tuyau (7),
dans laquelle le second tuyau (7) inclut une partie de grand diamètre (7a), une partie de petit diamètre (7b) formée du côté de la chambre de soupape de la partie de grand diamètre (7a), et une partie de gradin (7c) agencée sur une partie de frontière entre la partie de grand diamètre (7a) et la partie de petit diamètre (7b) ;
l'élément de rectification (9) est fixé à la partie de grand diamètre (7a) du second tuyau (7) par des moyens de positionnement dans un état où l'élément de rectification (9) et la partie de gradin (7c) sont mis en contact l'un avec l'autre et un mouvement axial du second tuyau (7) est restreint par la partie de gradin (7c) ;
**caractérisée en ce que** les moyens de positionnement sont une partie sertie (10) qui déforme une partie de paroi du second tuyau (7) dirigée vers l'élément de rectification (9) dans la direction de diamètre intérieur du second tuyau (7) et fixe l'élément de rectification (9) à la partie de paroi du second tuyau (7).

2. Soupape motorisée selon la revendication 1, dans laquelle
l'élément de rectification (9) inclut un élément élastique (9b) rappelé dans une direction périphérique extérieure du second tuyau (7) ; et
les moyens de positionnement sont une partie de mise en prise (9c) agencée sur l'élément élastique (9b) et une partie en prise (7d) formée sur une surface intérieure du second tuyau (7), et la partie de mise en prise (9c) agencée sur l'élément élastique (9b) est en prise avec la partie en prise (7d) agencée sur le second tuyau (7).

3. Soupape motorisée selon la revendication 1 ou 2, dans laquelle l'élément de rectification (9) est un élément en forme de disque ou de forme colonnaire coaxial au second tuyau (7) et ferme le second tuyau (7), et l'élément de rectification (9) est pourvu d'une ouverture ou d'une pluralité d'ouvertures communiquant dans la direction axiale du second tuyau (7).

4. Soupape motorisée selon la revendication 1 ou 2, dans laquelle l'élément de rectification (9) inclut une partie de collerette (9d) le long d'une circonférence intérieure du second tuyau (7) et un filet (9e) étiré au-dessus de la partie de collerette (9d).

5. Soupape motorisée selon la revendication 4, dans laquelle au moins une partie du filet (9e) fait saillie en forme de cône dans la partie de petit diamètre (7b) du second tuyau (7).

6. Soupape motorisée selon l'une quelconque des revendications 1 à 5, dans laquelle la partie de gradin (7c) est agencée du côté de la partie de grand diamètre par la dimension de diamètre intérieur ou plus de la partie de petit diamètre (7b) depuis une portion d'extrémité de la partie de petit diamètre (7b) du côté du corps de soupape.
